# EUROPEAN PATENT APPLICATION

(11) **EP 4 478 667 A1**
(43) Date of publication of application: **18.12.2024**
(21) Application number: 23762807.8
(22) Date of filing: 23.02.2023
(51) Int. Cl.: H04L 12/06

(54) **AUTHENTICATION METHOD, METHOD FOR SENDING INFORMATION, PROCESSING METHOD, AND COMMUNICATION APPARATUS**

(30) Priority: 02.03.2022 CN 202210203416
(71) Applicant: Huawei Technologies Co., Ltd., Shenzhen, Guangdong 518129 (CN)
(72) Inventor: LI, Fei, Shenzhen, Guangdong 518129 (CN); HE, Chengdong, Shenzhen, Guangdong 518129 (CN)
(74) Representative: Epping - Hermann - Fischer
(86) International application number: PCT/CN2023/077852
(87) International publication number: WO 2023/165407

(57) **Abstract**

This application relates to the communication field, and provides an authentication method, an information sending method, a processing method, and a communication apparatus, to resolve a problem that authentication reliability is low because an authentication procedure can be triggered by only a mobility management function, and improve the authentication reliability. The method includes: A first network function determines first information, where the first network function belongs to a home network of user equipment; then, the first network function selects a first mobility management function based on the first information, where the first mobility management function belongs to a first serving network with which the user equipment is registered; and finally, the first network function sends a first request to the first mobility management function, where the first request requests the first mobility management function to perform a first authentication procedure on the user equipment.

## Description

This application claims priority to Chinese Patent Application No. 202210203416.8, filed with the China National Intellectual Property Administration on March 2, 2022 and entitled "AUTHENTICATION METHOD, INFORMATION SENDING METHOD, PROCESSING METHOD, AND COMMUNICATION APPARATUS", which is incorporated herein by reference in its entirety.

### TECHNICAL FIELD

This application relates to the communication field, and in particular, to an authentication method, an information sending method, a processing method, and a communication apparatus.

### BACKGROUND

The 3rd generation partnership project (3rd generation partnership project, 3GPP) defines the following two authentication procedures: extensible authentication protocol-authentication and key agreement (extensible authentication protocol-authentication and key agreement, EAP-AKA') and the 5th-generation mobile communication technology authentication and key agreement (the 5th-Generation mobile communication technology authentication and key agreement, 5G AKA). Currently, during authentication between user equipment and a network, only an access and mobility management function (access and mobility management function, AMF) network element sends an authentication request to an authentication server function (authentication server function, AUSF) network element, then the AUSF network element sends an authentication obtaining request to a unified data management (unified data management, UDM) network element, and then the UDM network element selects an EAP-AKA' authentication procedure or a 5G AKA authentication procedure to perform authentication on the user equipment. However, the authentication procedure can be triggered by only the AMF network element. Therefore, applicability is poor in some scenarios, and a problem of low authentication reliability may be caused.

### SUMMARY

Embodiments of this application provide an authentication method, an information sending method, a processing method, and a communication apparatus, to improve authentication reliability.

To achieve the foregoing objective, this application uses the following technical solutions.

According to a first aspect, an authentication method is provided. The authentication method includes: A first network function determines first information, where the first network function belongs to a home network of user equipment; then, the first network function selects a first mobility management function based on the first information, where the first mobility management function belongs to a first serving network with which the user equipment is registered; and finally, the first network function sends a first request to the first mobility management function, where the first request requests the first mobility management function to perform a first authentication procedure on the user equipment.

In the conventional technology, there is a scenario in which a KAUSF needs to be refreshed in a home network. For example, a steering of roaming (steer of roaming, SOR) message needs to be protected by using the KAUSF, and primary authentication refresh needs to be performed when the KAUSF expires. However, in this case, a mobility management function does not know that authentication needs to be performed, and naturally does not initiate an authentication procedure. Therefore, if the authentication is triggered based on the mobility management function, there is a problem of low authentication reliability. In embodiments of this application, the first network function that belongs to the home network determines the first mobility management function, and sends a request to the first mobility management function, so that the first mobility management function can perform a subsequent authentication procedure based on a requirement of the home network. This can resolve a problem that the authentication reliability is low because the authentication procedure can be triggered by only the mobility management function, so that the authentication reliability is improved.

In a possible design solution, the first information may include a serving network name of the first serving network; and that the first network function determines the first mobility management function based on the first information includes: the first network function determines the first mobility management function based on the serving network name; and/or the first information may include an identifier of a first authentication server function; and that the first network function determines the first mobility management function based on the first information includes: the first network function determines a serving network name of the first serving network based on the identifier of the first authentication server function, and further determines the first mobility management function based on the serving network name; and/or the first information may include an access type; and that the first network function determines the first mobility management function based on the first information includes: the first network function determines a serving network name of the first serving network based on the access type, and further determines the first mobility management function based on the serving network name. In this way, the first network function that belongs to the home network can correctly select the first mobility management function based on the first information. This can improve an authentication success rate and authentication efficiency, so that the authentication reliability is further improved. Further, that a first network function determines first information includes: The first network function receives the first information from a third network function. The first network function may be a unified data management function, the third network function may be one of the following: the first authentication server function, an authentication and key management for applications anchor function, or a third-party application function, and the third network function belongs to the home network. In this way, when the first network function is the unified data management function, the first information may be obtained from the third network function that belongs to the same home network, so that the first network function can correctly select the first mobility management function to perform authentication on the user equipment. In addition, third network functions are flexible and diversified, so that an application scope of this solution is improved.

Optionally, the first information may be carried in one of the following: a second request, an authentication obtaining request, a steering of roaming protection response, or a user equipment parameter update protection response. The authentication obtaining request, the steering of roaming protection response, or the user equipment parameter update protection response may further carry second information, and the second information indicates the first network function to perform authentication on the user equipment. Correspondingly, that the first network function determines the first mobility management function based on the first information may include: The first network function determines the first mobility management function based on the first information after obtaining the second information. In this way, based on different third network functions, the first information may be carried in the second request for sending, or may be carried in another message for sending, to trigger the first network function to initiate the authentication. The authentication procedure may be triggered by using different messages based on different trigger mechanisms, can be flexibly used based on a specific scenario, and has high applicability. In another possible design solution, the first information may include information about the first mobility management function. In this way, the first network function may alternatively correctly select the first mobility management function directly based on the information about the first mobility management function, to perform authentication on the user equipment.

Further, that a first network function determines first information includes: The first network function receives the first information from a third network function. The first network function may be the first authentication server function, and the third network function may be a unified data management function. In this way, when the first network function is the first authentication server function, the first network function obtains, from the unified data management function that belongs to the same home network, the first information including the information about the first mobility management function, so that the first network function selects the first mobility management function to perform authentication on the user equipment.

Optionally, the first information may be carried in one of the following: a second request, a first response, or an authentication obtaining response. The authentication obtaining response may further carry second information, and the second information indicates the first network function to perform authentication on the user equipment. Correspondingly, that the first network function determines the first mobility management function based on the first information includes: The first network function determines the first mobility management function based on the first information after obtaining the second information. In this way, when the first information includes the information about the first mobility management function, the first information sent based on the unified data management function may be carried in the second request for sending, or may be carried in another message for sending. The authentication procedure may be triggered by using different messages based on different trigger mechanisms, can be flexibly used based on a specific scenario, and has high applicability.

In a possible design solution, after that the first network function sends a first request to the first mobility management function, the method further includes: The first network function receives third information from the first mobility management function. The third information indicates that the first mobility management function has terminated or suspended the first authentication procedure initiated by the first network function. In this way, an authentication conflict resolution mechanism is set in the first mobility management function, so that a problem that an authentication conflict exists between the first authentication procedure initiated by the first network function that belongs to the home network and a second authentication procedure initiated by the first mobility management function that belongs to a serving network can be resolved, and the authentication reliability can be improved.

In a possible design solution, after that the first network function sends a first request to the first mobility management function, the method further includes: The first network function receives no fourth information from the first mobility management function within a period of time, or the first network function receives fifth information from the first mobility management function; and the first network function sends a third request to a second mobility management function. The fourth information indicates that the first mobility management function has accepted the first request, the fifth information indicates that the first mobility management function has rejected the first request, the second mobility management function belongs to a second serving network with which the user equipment is registered, the second mobility management function is determined based on sixth information, and the third request requests the second mobility management function to perform authentication on the user equipment. In this way, in a dual-registration scenario, the first network function may determine, by setting a timing mechanism or directly based on the fifth information returned by the first mobility management function, whether the selected first mobility management function that belongs to the first serving network with which the user equipment is registered can perform authentication on the user equipment, and therefore further determine to switch to another registered serving network to perform authentication on the user equipment, so that a problem that the authentication fails because a serving network is incorrectly selected or fails to be selected in the dual-registration scenario can be effectively resolved, and therefore the authentication success rate and reliability are improved.

Optionally, the first request may carry the identifier of the first authentication server function, and the identifier of the first authentication server function is used by the first mobility management function to determine a second network function. In this way, the first request carries the identifier of the first authentication server function that belongs to the home network, and the first mobility management function may select the first authentication server function as the second network function based on the identifier, so that an authentication rate is improved.

According to a second aspect, an information sending method is provided. The method includes: A third network function determines first information, where the first information is used to determine a first mobility management function, and the first mobility management function belongs to a first serving network with which user equipment is registered; and the third network function sends the first information to a first network function, where the first network function and the third network function belong to a home network of the user equipment.

In a possible design solution, the first information may include a serving network name of the first serving network; and/or the first information may include an identifier of a first authentication server function, and the first mobility management function is a mobility management function corresponding to the identifier of the first authentication server function; and/or the first information may include an access type, and the first mobility management function is a mobility management function corresponding to the access type.

Further, the first network function may be a unified data management function, and the third network function may be one of the following: the first authentication server function, an authentication and key management for applications anchor function, or a third-party application function.

Optionally, the first information may be carried in one of the following: a second request, an authentication obtaining request, a steering of roaming protection response, or a user equipment parameter update protection response. The authentication obtaining request, the steering of roaming protection response, or the user equipment parameter update protection response may further carry second information, and the second information indicates the first network function to perform authentication on the user equipment.

In another possible design solution, the first information may include information about the first mobility management function.

Further, the first network function may be the first authentication server function, and the third network function may be a unified data management function.

Optionally, the first information may be carried in one of the following: a second request, a first response, or an authentication obtaining response. The authentication obtaining response may further carry second information, and the second information indicates the first network function to perform authentication on the user equipment.

In a possible design solution, before that the third network function sends the first information to a first network function, the method further includes: The third network function receives seventh information from the first network function. The seventh information is used to determine the first information. The seventh information may include the serving network name of the first serving network, and that the third network function determines the first information based on the seventh information includes: the third network function determines the information about the first mobility management function based on the serving network name; and/or the seventh information may include the identifier of the first authentication server function, and that the third network function determines the first information based on the seventh information includes: the third network function determines the serving network name of the first serving network based on the identifier of the first authentication server function, and further determines the information about the first mobility management function based on the serving network name; and/or the seventh information may include the access type, and that the third network function determines the first information based on the seventh information includes: the third network function determines the serving network name of the first serving network based on the access type, and further determines the information about the first mobility management function based on the serving network name. Optionally, the seventh information may be carried in one of the following: a fourth request, an authentication obtaining request, a steering of roaming protection response, or a user equipment parameter update protection response. The authentication obtaining request, the steering of roaming protection response, or the user equipment parameter update protection response may further carry eighth information, and the eighth information indicates the third network function to perform authentication on the user equipment. Correspondingly, that the third network function determines the first information based on the seventh information includes: The third network function determines the information about the first mobility management function based on the seventh information after obtaining the eighth information.

In addition, for technical effects of the method according to the second aspect, refer to technical effects of the authentication method according to the first aspect. Details are not described herein again.

According to a third aspect, a processing method is provided. The method includes: A first mobility management function receives a first request from a first network function, where the first mobility management function belongs to a first serving network with which user equipment is registered, and the first network function belongs to a home network of the user equipment; and the first mobility management function determines a second network function after receiving the first request.

Optionally, the first request may carry an identifier of a first authentication server function, and the second network function is the first authentication server function.

In a possible design solution, the first network function may be a unified data management function, and that the first mobility management function determines a second network function after receiving the first request includes: If the first request does not carry the identifier of the first authentication server function, the first mobility management function determines the second network function based on ninth information, where the ninth information is information recorded by the first mobility management function. The ninth information may include a routing indicator, and the second network function is a second authentication server function corresponding to the routing indicator; and/or the ninth information may include an identifier of an authentication server function group, and the second network function is a second authentication server function in the authentication server function group corresponding to the identifier of the authentication server function group; and/or the ninth information may include a subscriber identifier, and the second network function is a second authentication server function corresponding to the subscriber identifier.

In a possible design solution, the method according to the third aspect further includes: If the first mobility management function has an ongoing second authentication procedure, the first mobility management function sends third information to the first network function, where the third information indicates that the first mobility management function has terminated or suspended a first authentication procedure of the first network function; or the first mobility management function sends fifth information to the first network function, where the fifth information indicates that the first mobility management function has rejected the first request.

In addition, for technical effects of the method according to the third aspect, refer to technical effects of the authentication method according to the first aspect. Details are not described herein again.

According to a fourth aspect, a communication apparatus is provided. The apparatus includes a processing module and a transceiver module. The processing module is configured to determine first information. The processing module is further configured to determine a first mobility management function based on the first information, where the first mobility management function belongs to a first serving network with which user equipment is registered. The transceiver module is configured to send a first request to the first mobility management function, where the first request requests the first mobility management function to perform a first authentication procedure on the user equipment.

Optionally, the transceiver module may include a receiving module and a sending module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module, and the storage module stores a program or instructions. When the processing module executes the program or the instructions, the communication apparatus according to the fourth aspect is enabled to perform the authentication method according to the first aspect.

It should be noted that the communication apparatus according to the fourth aspect may be a network device, may be a chip (system) or another part or component that can be disposed in the network device, or may be an apparatus that includes the network device. This is not limited in this application.

According to a fifth aspect, a communication apparatus is provided. The apparatus includes a processing module and a transceiver module. The processing module is configured to determine first information, where the first information is used to determine a first mobility management function, and the first mobility management function belongs to a first serving network with which user equipment is registered. The transceiver module is configured to send the first information to a first network function, where the first network function belongs to a home network of the user equipment.

Optionally, the transceiver module may include a receiving module and a sending module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module, and the storage module stores a program or instructions. When the processing module executes the program or the instructions, the communication apparatus according to the fifth aspect is enabled to perform the method according to the second aspect.

It should be noted that the apparatus according to the fifth aspect may be a network device, may be a chip (system) or another part or component that can be disposed in the network device, or may be an apparatus that includes the network device. This is not limited in this application. According to a sixth aspect, a communication apparatus is provided. The apparatus includes a processing module and a transceiver module. The transceiver module is configured to receive a first request from a first network function, where the first network function belongs to a home network of user equipment. The processing module is configured to determine a second network function after the first request is received.

Optionally, the transceiver module may include a receiving module and a sending module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module, and the storage module stores a program or instructions. When the processing module executes the program or the instructions, the communication apparatus according to the sixth aspect is enabled to perform the method according to the third aspect.

It should be noted that the apparatus according to the sixth aspect may be a network device, may be a chip (system) or another part or component that can be disposed in the network device, or may be an apparatus that includes the network device. This is not limited in this application. According to a seventh aspect, a communication apparatus is provided. The apparatus includes a processor, and the processor is coupled to a memory. The processor is configured to execute a computer program stored in the memory, to enable the communication apparatus to perform the method according to any one of the first aspect to the third aspect.

In this application, the communication apparatus according to the seventh aspect may be the first network function, the third network function, or the first mobility management function in any one of the first aspect, the second aspect, or the third aspect, a chip (system) or another part or component that can be disposed in the first network function, the third network function, or the first mobility management function, or an apparatus that includes the first network function, the third network function, or the first mobility management function.

In addition, for technical effects of the communication apparatus according to the fourth aspect to the seventh aspect, refer to technical effects of the authentication method according to the first aspect. Details are not described herein again.

According to an eighth aspect, a communication system is provided. The communication system includes one or more terminal devices, one or more access network devices, and one or more core network devices, such as a first network function and a first mobility management function. According to a ninth aspect, a computer-readable storage medium is provided. The computer-readable storage medium stores a computer program or instructions, and when the computer program or the instructions are run on a computer, the computer is enabled to perform the method according to any one of the first aspect to the third aspect.

According to a tenth aspect, a computer program product is provided. The computer program product includes a computer program or instructions, and when the computer program or the instructions are run on a computer, the computer is enabled to perform the method according to any one of the first aspect to the third aspect.

### BRIEF DESCRIPTION OF DRAWINGS

FIG. 1 is a diagram of an architecture of a communication system according to an embodiment of this application;
FIG. 2 is a schematic flowchart 1 of an authentication method according to an embodiment of this application;
FIG. 3 is a schematic flowchart 2 of an authentication method according to an embodiment of this application;
FIG. 4 is a schematic flowchart 3 of an authentication method according to an embodiment of this application;
FIG. 5 is a schematic flowchart 4 of an authentication method according to an embodiment of this application;
FIG. 6 is a diagram 1 of a structure of a communication apparatus according to an embodiment of this application; and
FIG. 7 is a diagram 2 of a structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicle communication system, a 4th generation (4th generation, 4G) mobile communication system, such as a long term evolution (long term evolution, LTE) system, a worldwide interoperability for microwave access (worldwide interoperability for microwave access, WiMAX) communication system, a 5th generation (5th generation, 5G) mobile communication system, such as a new radio (new radio, NR) system, and a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that, meanings expressed by the terms are consistent when differences between the terms are not emphasized. "Of (of)", "corresponding, relevant (corresponding, relevant)", and "corresponding (corresponding)" may sometimes be interchangeably used. It should be noted that, meanings expressed by the terms are consistent when differences between the terms are not emphasized.

In embodiments of this application, a subscript such as in Wi may be mistakenly written in a non-subscript form such as W1 sometimes, and meanings expressed by W₁ and W1 are consistent when differences between W₁ and W1 are not emphasized.

It should be noted that names of messages between the network elements, names of parameters in the messages, or the like in the following embodiments of this application are merely examples, and there may be other names during specific implementation. This is not specifically limited in embodiments of this application.

It should be noted that, in the descriptions of this application, terms such as "first" or "second" are merely used for distinction and description, and cannot be understood as an indication or implication of relative importance, or as an indication or implication of an order. Network devices in this application have different numbers, such as a "first mobility management function" The numbers are merely used for ease of context writing, and different sequence numbers do not have specific technical meanings, for example, a first AUSF network element and a second AUSF network element may be understood as one or any one of a series of network devices. It may be understood that during specific implementation, the network devices with different numbers may alternatively be network devices of a same type. This is not limited in this application.

It may be understood that in embodiments of this application, a first network function, a second network function, or the first mobility management function may perform some or all of the steps in embodiments of this application. These steps are merely examples. In embodiments of this application, other steps or variations of various steps may be further performed. In addition, the steps may be performed in a sequence different from a sequence presented in embodiments of this application, and not all of the steps in embodiments of this application may be necessarily to be performed.

A network architecture and a service scenario described in embodiments of this application are intended to describe the technical solutions in embodiments of this application more clearly, but do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

Currently, during primary authentication between user equipment and a network, a primary authentication procedure is triggered by an AMF network element based on a specific condition. For example, the user equipment sends initial registration, or the AMF network element periodically performs primary authentication on the user equipment. Specifically, the primary authentication procedure initiated by the AMF includes the following steps.
(1) The AMF network element sends an authentication request (nausf_UEauthentication_authenticate request) to an AUSF network element. The authentication request carries a subscriber identifier and a serving network (server network, SN) name. The subscriber identifier may be a subscription permanent identifier (subscription permanent identifier, SUPI), and the serving network name (SN name) is a name of a network with which a user registers, that is, a name of a network in which the AMF network element is located.
(2) The AUSF network element sends an authentication obtaining request (nudm_UEauthentication_get request) to a UDM network element based on the authentication request. The authentication obtaining request still carries the subscriber identifier and the serving network name.
(3) The UDM network element selects an authentication manner based on the authentication obtaining request. The authentication manner includes 5G AKA authentication and EAP-AKA' authentication. The UDM network element may select any authentication manner to perform a subsequent authentication procedure. For specific implementations of the 5G AKA authentication and the EAP-AKA' authentication, refer to existing implementations. Details are not described in embodiments of this application.

However, the primary authentication procedure (1) to (3) can be initiated by only the AMF network element. The triggering manner is not applicable to a scenario in which a KAUSF needs to be refreshed in a home network. For example, in a steering of roaming (steering of roaming, SOR) scenario, the AUSF network element needs to protect SOR information by using a KAUSF generated in an authentication process, and start an SOR counter for counting. When the SOR counter rolls over, the KAUSF expires, and in this case, the AUSF network element can no longer protect the SOR information by using the KAUSF. In this case, the AMF network element needs to re-trigger the authentication procedure to obtain a new KAUSF to protect the SOR information. However, in this case, the AMF network element does not know that authentication needs to be performed. If authentication is triggered based on the AMF network element, a problem of low authentication reliability is caused, and communication efficiency and an authentication rate may be affected.

It can be learned from the foregoing that an applicable scenario in which the authentication procedure for the user can be triggered by only the AMF network element is limited, flexibility of authentication processing is poor, and the authentication reliability is affected. To resolve a problem in the conventional technology that the authentication reliability is low because the authentication can be triggered by only the AMF network element, an embodiment of this application provides an authentication method. For a specific implementation, refer to the following method embodiment. Details are not described herein.

It should be noted that, the "first network function", the "second network function", the "first mobility management function", the "first authentication server function", or the like in embodiments of this application may also be referred to as a "first network function network element", a "second network function network element", a "first mobility management function network element", a "first authentication server function network element", or the like, and may also be referred to as a "first network function device", a "second network function device", a "first mobility management function device", or a "first authentication server function device". In other words, an "xx function" in embodiments of this application may be referred to as an "xx function network element", an "xx network element", or an "xx device". This is not specifically limited in embodiments of this application.

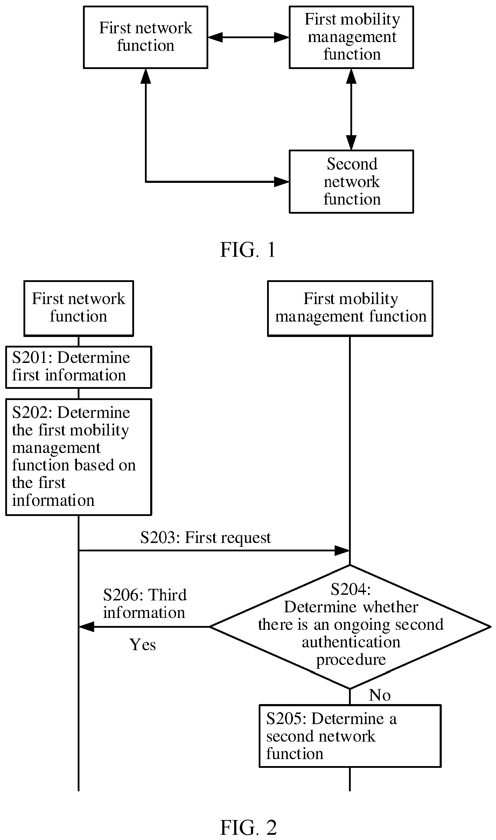

For ease of understanding embodiments of this application, a communication system shown in FIG. 1 is used as an example to first describe in detail a communication system applicable to embodiments of this application. For example, FIG. 1 is a diagram of an architecture of a communication system to which an authentication method is applicable according to an embodiment of this application.

As shown in FIG. 1, the communication system includes a first network function, a second network function, and a first mobility management function. The first network function, the second network function, and the first mobility management function may communicate with each other. The first network function and the second network function belong to a home network of user equipment, and the first mobility management function belongs to a first serving network with which the user equipment is currently registered. The first serving network may be the home network, or may be a visited network. This is not limited herein.

Specifically, the first network function determines first information, selects the first mobility management function based on the first information, and then sends a first request to the first mobility management function, where the first request requests the first mobility management function to perform a first authentication procedure on the user equipment. The first mobility management function accepts the first request, and selects the second network function to perform a subsequent authentication procedure, where the subsequent authentication procedure may be an EAP-AKA' authentication procedure or a 5G AKA authentication procedure. Therefore, the first network function that belongs to the home network determines the first mobility management function, and sends a request to the first mobility management function, so that the first mobility management function can perform the subsequent authentication procedure based on a requirement of the home network. This can resolve a problem that authentication reliability is low because an authentication procedure can be triggered by only a mobility management function, so that the authentication reliability is improved.

The first network function may be a UDM network element, and is mainly configured to store user data such as subscription information and authentication/authorization information, or may be an AUSF network element, and mainly implements 3GPP and non-3GPP access authentication. The first mobility management function may be an AMF network element, and is mainly responsible for mobility management in a wireless network, such as user location update, user registration with a network, and cell handover. The first network function may be the same as or different from the second network function.

In some embodiments, for example, in a dual-registration scenario, the communication system may further include a second mobility management function, and the second mobility management function belongs to a second serving network with which the user equipment is registered.

The user equipment on which authentication is performed is a terminal that accesses the communication system and has wireless sending and receiving functions, or a chip or a chip system that can be disposed in the terminal. The user equipment may also be referred to as a user apparatus, an access terminal, a subscriber unit, a subscriber station, a mobile station, a remote station, a remote terminal, a mobile device, a user terminal, a terminal, a terminal device, a wireless communication device, a user agent, or a user apparatus. The user equipment in embodiments of this application may be a mobile phone (mobile phone), a tablet computer (Pad), a computer having wireless sending and receiving functions, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the vehicle-mounted module, the vehicle-mounted module assembly, the vehicle-mounted component, the vehicle-mounted chip, or the vehicle-mounted unit that is built in the vehicle, to implement the authentication method provided in this application.

It should be noted that the authentication method provided in embodiments of this application may be applicable to communication between the first network function, the second network function, and the first mobility management function shown in FIG. 1. For a specific implementation, refer to the following method embodiment. Details are not described herein.

It should be noted that the solution in embodiments of this application may also be applied to another communication system, and a corresponding name may also be replaced with a name of a corresponding function in the another communication system.

It should be understood that FIG. 1 is merely a simplified diagram of an example for ease of understanding. The communication system may further include another network device and/or another terminal device that are/is not shown in FIG. 1.

The following describes in detail the authentication method provided in embodiments of this application with reference to FIG. 2 to FIG. 5.

It should be noted that authentication in embodiments of this application may be initial authentication, or may be re-authentication. This is not specifically limited in embodiments of this application.

For example, FIG. 2 is a schematic flowchart 1 of an authentication method according to an embodiment of this application. The authentication method may be applicable to communication between the first network function, the first mobility management function, and the second network function shown in FIG. 1.

As shown in FIG. 2, the authentication method includes the following steps.

S201: A first network function determines first information.

The first network function belongs to a home network of user equipment, the user equipment is user equipment on which authentication needs to be performed, and the first information indicates the first network function to select a first mobility management function.

In a possible design solution, the first network function may be a UDM network element. Specifically, the first network function may receive the first information from a third network function.

The third network function may be a first AUSF network element, an authentication and key management for applications anchor function (authentication and key management for applications anchor function, AAnF) network element, or a third-party application function (application function, AF) network element.

In this case, the first information may include one or more of a serving network name (SN name) of a first serving network, an identifier of the first AUSF network element, or an access type (access type).

The serving network name indicates a name of the first serving network with which the user equipment is currently registered, that is, a serving network to which the first mobility management function belongs. The first mobility management function may be an AMF network element. The identifier of the first AUSF network element may identify an AUSF network element for performing authentication on the user equipment. The access type is a manner in which the user equipment accesses the first serving network, and may be 3GPP access or non-3GPP access. It should be noted that the first serving network may be a home network, or may be a visited network. This is not limited in this embodiment of this application.

Optionally, the first information may be carried in one of the following: a second request, an authentication obtaining request, an SOR protection response, or a user equipment parameter update (UE parameter update, UPU) protection response. The second request requests the first network function to perform authentication on the user equipment. The authentication obtaining request, the SOR protection response, or the UPU protection response may further carry second information, and the second information indicates the first network function to perform authentication on the user equipment.

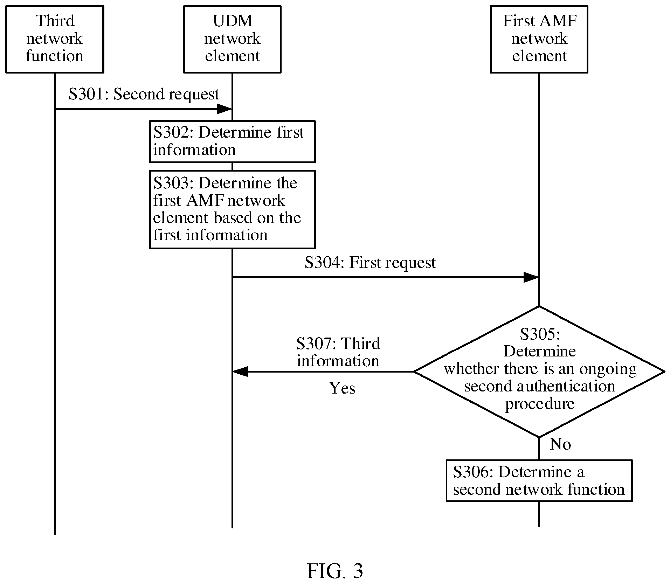

In addition, the authentication obtaining request is initiated by the AUSF network element to the UDM network element in an existing authentication process, the SOR protection response is returned by the AUSF network element to the UDM network element in an SOR scenario, and the UPU protection response is returned by the AUSF network element to the UDM network element in a UPU scenario. Therefore, based on different third network functions, an authentication procedure may be triggered by the first information based on reuse of different existing messages, can be flexibly used based on a specific scenario, and has high applicability. For a specific implementation process, refer to the following authentication method shown in FIG. 3. Details are not described herein.

It may be understood that the foregoing message carrying the first information may carry a subscriber identifier, and the subscriber identifier may indicate the user equipment on which authentication needs to be performed. The subscriber identifier may be a subscription permanent identifier (SUPI) of the user equipment on which authentication needs to be performed, or may be a generic public subscription identifier (generic public subscription identifier, GPSI) of the user equipment on which authentication needs to be performed.

In a possible design solution, the first network function may obtain the first information based on local configuration information.

Specifically, the first information may include information about the first mobility management function, the information about the first mobility management function may include an identifier of the first mobility management function, and the first network function may determine the information about the first mobility management function based on the local configuration information. Based on the local configuration information, a first mobility management function accessed by using the 3GPP may be preferentially selected, a first mobility management function that last performs authentication in the first serving network with which the user equipment is registered may be selected, a latest first mobility management function registered with the first network function may be selected, or a first mobility management function that supports authentication may be selected. This is not limited herein.

In a possible design solution, when determining that the user equipment is in a dual-registration scenario, to be specific, when determining that there are two mobility management functions serving the user equipment, the first network function may further request a status of the user equipment from the two mobility management functions, for example, a link status of the user equipment, or a status indicating whether authentication can be performed on the user equipment. The first network function may determine the first mobility management function based on statuses of the user equipment returned by the two mobility management functions.

Specifically, the first network function may send a status request message to each of the two mobility management functions, and the status request message may carry the subscriber identifier of the user equipment. The two mobility management functions each return a status request response to the first network function based on the status request message, and the status request response carries the link status of the user equipment or the status indicating whether authentication can be performed on the user equipment. For example, if link statuses of the user equipment that are obtained by the first network function from the two mobility management functions are respectively a connected mode and an idle mode, the first network function should select a first mobility management function that returns a status being the connected mode. For another example, if statuses that indicate whether authentication can be performed on the user equipment and that are obtained by the first network function from the two mobility management functions are respectively that authentication can be performed on the user equipment and that authentication cannot be performed on the user equipment, the first network function should select a first mobility management function that returns a status indicating that authentication can be performed on the user equipment. For another example, if link statuses of the user equipment that are obtained by the first network function from the two mobility management functions are both a connected mode or both an idle mode, the first network function may further determine the first mobility management function based on the local configuration information. To be specific, the first network function may preferentially select the first mobility management function accessed by using the 3 GPP, may select the first mobility management function that last performs authentication in the first serving network with which the user equipment is registered, may select the latest first mobility management function registered with the first network function, or may select the first mobility management function that supports authentication. This is not limited herein.

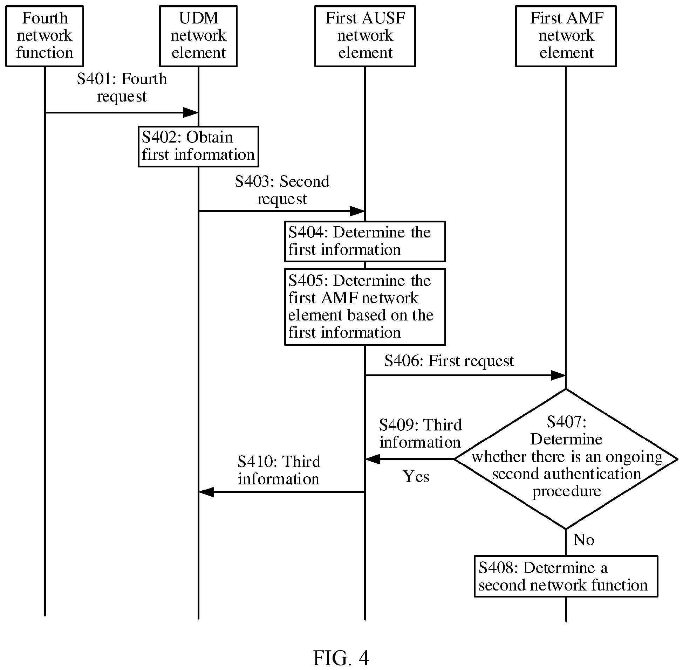

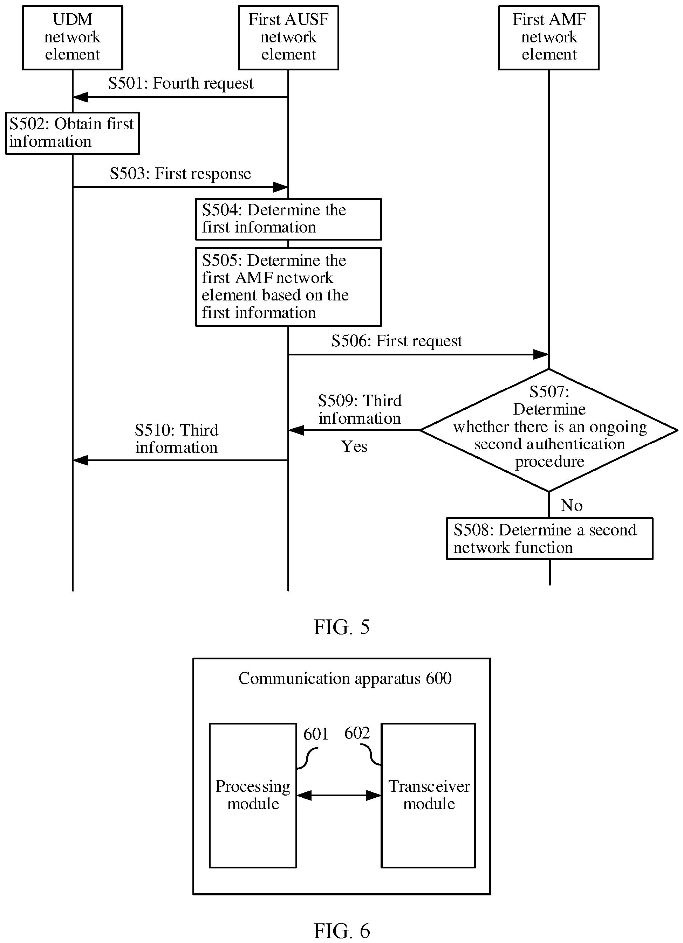

In a possible design solution, the first network function may further determine whether the user equipment has an ongoing authentication procedure, for example, determine whether the first network function has received an authentication request of the user equipment and/or has sent an authentication response for the user equipment and/or has not received an authentication result acknowledgment message for the user equipment. If a result is yes, the first network function determines that the user equipment has an ongoing authentication procedure, or if a result is no, the first network function determines that the user equipment has no ongoing authentication procedure. If it is determined that the user equipment has an ongoing authentication procedure, the first network function may perform S201 and S202 after the authentication is completed, in other words, perform S201 and S202 after receiving the authentication result acknowledgment message for the user equipment. Alternatively, S201 and S202 may be performed after an authentication result is confirmed as a failure. Optionally, if the authentication result acknowledgment message indicates a success, the first network function may further skip a subsequent authentication procedure, and directly return an authentication success response to the third network function. In another possible design solution, the first network function may be an AUSF network element. Specifically, the first network function may receive the first information from a third network function. In this case, the third network function may be a UDM network element, and the first information may include information about the first mobility management function. The first information may be carried in one of the following: a second request, a first response, or an authentication obtaining response. The second request requests the first network function to perform authentication on the user equipment, the first response is a response message for the following fourth request, the authentication obtaining response further carries second information, and the second information indicates the first network function to perform authentication on the user equipment. For a specific implementation process, refer to the following authentication methods shown in FIG. 4 and FIG. 5. Details are not described herein.

Similarly, the message carrying the first information may also carry a subscriber identifier, where the subscriber identifier may be an SUPI or a GPSI.

It should be noted that functions of the second information carried in different messages may be the same, but specific fields occupied by the second information in different messages may be different. This may be determined based on an actual requirement.

It may be understood that the first information may also indicate the first network function to perform authentication on the user equipment.

S202: The first network function determines the first mobility management function based on the first information.

In a possible design solution, the first network function may be the UDM network element. Because the UDM network element records an authentication event of the user equipment, the UDM network element records a correspondence between the identifier of the first AUSF network element, the access type, and the serving network name. In addition, for each serving network, the UDM network element correspondingly records one mobility management function in the serving network.

Specifically, the first network function may determine the first mobility management function in the following manners.

Manner 1-1: The first information may include the serving network name of the first serving network, and the first network function determines the first mobility management function based on the serving network name.

Manner 1-2: The first information may include the identifier of the first AUSF network element, and the first network function determines the first mobility management function based on the identifier of the first AUSF network element.

Manner 1-3: The first information may include the access type, and the first network function determines the first mobility management function based on the access type.

Manner 1-4: The first information may include the information about the first mobility management function, where the information about the first mobility management function may be obtained by the first network function based on the local configuration information in step S201, and the first network function directly determines the first mobility management function based on the information about the first mobility management function.

It should be noted that the first network function may determine the first mobility management function in any one or more of the foregoing manners 1-1 to 1-4.

In another possible design solution, the first network function may be the first AUSF network element. In this case, the first information may include the information about the first mobility management function, the information about the first mobility management function may be from the UDM network element, and the first network function determines the first mobility management function based on the information about the first mobility management function. For a specific implementation process, refer to the following authentication methods shown in FIG. 4 and FIG. 5. Details are not described herein.

S203: The first network function sends a first request to the first mobility management function. The first request requests the first mobility management function to perform a first authentication procedure on the user equipment, and the first authentication procedure may be an authentication procedure triggered based on the foregoing steps S201 to S203.

It may be understood that the first request carries the subscriber identifier.

Optionally, to ensure that the first mobility management function can correctly select the second network function, the first request may further carry the identifier of the first AUSF network element in addition to the subscriber identifier.

Optionally, an authentication conflict resolution mechanism is set in the first mobility management function, to resolve a problem of a conflict between an authentication procedure of the home network and an authentication procedure of the serving network, improve authentication efficiency and an authentication success rate, and further improve authentication reliability. Specifically, the following steps S204 to S206 are included.

Optionally, the first request further carries a dual public land mobile network (public land mobile network, PLMN) registration indication that indicates that there are two PLMNs serving the user equipment, or indicates that there are two mobility management functions serving the user equipment.

S204: The first mobility management function determines whether there is an ongoing second authentication procedure.

The second authentication procedure may be an authentication procedure initiated by the first mobility management function, that is, an authentication procedure initiated by the first serving network.

In a possible design solution, if the first mobility management function does not have an ongoing second authentication procedure, the first mobility management function accepts the first request, and performs the following step S205.

In another possible design solution, if the first mobility management function has an ongoing second authentication procedure, the first mobility management function rejects the first request, and performs the following step S206.

In another possible design solution, if the second authentication procedure initiated by the first mobility management function fails, the first mobility management function may accept the first request, to be specific, may perform a previously suspended first authentication procedure or receive the first request again and perform the following step S205. That the second authentication procedure fails may be that the first mobility management function does not receive an authentication result, or the second authentication procedure is interrupted or terminated. This is not limited in this embodiment of this application.

If the first request carries the dual PLMN registration indication, and the user equipment is in the idle mode in the first mobility management function, the first mobility management function may not initiate an authentication procedure, and return indication information to the first network function to indicate that the UE is in the idle mode, or return rejection information.

If the first request does not carry the dual PLMN registration indication, and the user equipment is in the idle mode in the first mobility management function, the first mobility management function may attempt to initiate a paging procedure or a service request procedure to the user equipment, and then continue to perform S205 and a subsequent procedure.

S205: The first mobility management function determines the second network function.

The second network function is used to perform authentication on the user equipment, to be specific, perform a subsequent EAP-AKA' authentication procedure or a subsequent 5G AKA authentication procedure.

Specifically, if the first request carries the identifier of the first AUSF network element, the first mobility management function selects the first AUSF network element corresponding to the identifier as the second network function. In other words, the second network function is the same as the first AUSF network element.

It should be noted that when the first network function is the first AUSF network element, the first request may not carry the identifier of the first AUSF network element, and the first mobility management function may directly select the first AUSF network element (that is, the first network function), to perform a subsequent authentication procedure.

If the first network function is the UDM network element, and the first request does not carry the identifier of the first AUSF network element, the first mobility management function determines the second network function based on ninth information. The ninth information may be information recorded by the first mobility management function, and may include one or more of a routing indicator (routing indicator, RI), the SUPI, or an identifier of an AUSF group. The AUSF group may be a group to which the first AUSF network element belongs, and the SUPI may be sent by the first network function to the first mobility management function, or may be recorded by the first mobility management function.

Specifically, the first mobility management function may determine the second network function in one or more of the following manners.

Manner 2-1: The ninth information may include the routing indicator, and the first mobility management function selects a second AUSF network element corresponding to the routing indicator as the second network function.

Manner 2-2: The ninth information may include the identifier of the AUSF group, and the first mobility management function selects a second AUSF network element in the AUSF group corresponding to the identifier of the AUSF group as the second network function. In this case, the second AUSF network element may be any AUSF network element in the AUSF group.

Manner 2-3: The ninth information may include the subscriber identifier, and the first mobility management function selects a second AUSF network element corresponding to the subscriber identifier as the second network function.

It should be noted that the second AUSF network element may be the same as or different from the first AUSF network element.

S206: The first mobility management function sends third information to the first network function. The third information indicates that the first mobility management function has terminated or suspended the first authentication procedure initiated by the first network function. The first authentication procedure is the authentication procedure initiated based on S201 to S203. The third information may be an authentication termination or suspension indication, or may be a cause value of authentication termination or suspension, and the cause value may be that the first mobility management function has an ongoing second authentication procedure, or the first mobility management function has initiated a second authentication procedure. In other words, the third information indicates that the first mobility management function has an ongoing authentication procedure, and therefore the first mobility management function does not accept the first request of the first network function.

In addition, the third information may be sent by using a second response, and the second response is a response message for the first request.

In some embodiments, in the dual-registration scenario, the user equipment is registered with two serving networks. For example, the user equipment may be registered with the first serving network by using the first mobility management function of a first PLMN, and may be registered with a second serving network by using a second mobility management function of a second PLMN. In this case, the first network function may receive the first information of the first mobility management function and sixth information of the second mobility management function. Determining of the sixth information is similar to that of the first information. To be specific, a parameter included in the sixth information is similar to a parameter included in the first information, and a meaning of the sixth information is similar to a meaning of the first information. For details, refer to the foregoing steps S201 and S202. Details are not described herein again. Optionally, the sixth information may be obtained simultaneously with the first information, or may be obtained before or after the first information.

Optionally, the first information and the sixth information may be carried in one message for sending, or may be carried in different messages for separate sending.

After step S203 is performed, if the first network function receives no fourth information from the first mobility management function within a period of time, the first network function sends a third request to the second mobility management function.

The fourth information indicates that the first mobility management function has accepted the first request. The receiving no fourth information indicates that the first mobility management function cannot perform authentication on the user equipment. For example, the user equipment is in the idle mode, the user equipment cannot be paged for connection for a long time (the user equipment is unreachable), or there is no response to a service request sent to the user equipment, and therefore the authentication cannot be performed. The third request requests the second mobility management function to perform an authentication procedure on the user equipment, and the third request may also carry the subscriber identifier of the user equipment.

Specifically, the period of time is specified timing duration, a start moment of the timing duration may be a moment at which the first network function sends the first request, and the timing duration may be set by setting a timer. For example, after the first network function sends the first request, the timer starts timing. When the timing duration of the timer expires, that is, the timing ends, if the first network function still does not receive, from the first mobility management function, an indication indicating that the first request is accepted, the first network function sends the third request to the second mobility management function.

In addition, the fourth information may also be sent by using the second response, and the second response is the response message for the first request.

In a possible design solution, the first network function may receive fifth information from the first mobility management function, and then send the third request to the second mobility management function.

The fifth information indicates that the first mobility management function has rejected the first request, and the fifth information may include returned indication information or a returned cause value, for example, include that the first mobility management function cannot perform authentication on the user equipment, the user equipment is unreachable, or the user equipment is in the idle mode. The fifth information may also be sent by using the second response, and the second response is the response message for the first request.

Specifically, after performing step S203, the first network function may receive an indication or a cause value that is returned by the first mobility management function and that indicates that the first mobility management function cannot perform authentication, namely, the fifth information. The first network function determines, based on the fifth information, that the first mobility management function cannot perform authentication, and sends a request to the second mobility management function with which the user equipment is registered, so that the second mobility management function performs authentication on the user equipment.

The foregoing timing mechanism and the fifth information can resolve a problem that the user equipment cannot initiate authentication to another mobility management function because one mobility management function cannot perform authentication in the dual-registration scenario, so that the authentication success rate can be improved, and the authentication reliability can be further improved.

In another possible design solution, the first network function may respectively send the first request and the third request to the first mobility management function and the second mobility management function, and determine, based on returned information, a mobility management function that can perform authentication. The returned information may include an authentication result for the user equipment, may include an indication or a cause value indicating that the first mobility management function or the second mobility management function cannot perform authentication, or may include a link status of the user equipment. This is not limited herein. In this way, authentication efficiency in the dual-registration scenario can be improved by sending requests to a plurality of mobility management functions in parallel.

With reference to a specific 5G core network element, the following uses a single-registration scenario as an example to describe in detail a specific implementation method of the authentication method provided in embodiments of this application. A first network function is a UDM network element, and a first mobility management function is a first AMF network element.

For example, FIG. 3 is a schematic flowchart 2 of an authentication method according to an embodiment of this application. The authentication method may be applicable to the communication system shown in FIG. 1, and specifically implements the authentication method shown in FIG. 2.

As shown in FIG. 3, the authentication method includes the following steps.

S301: A third network function sends a second request to the UDM network element.

The second request requests the UDM network element to perform authentication on user equipment, and the second request carries a subscriber identifier of the user equipment. The third network function may be a first AUSF network element, an AAnF network element, or a third-party AF network element.

When the third network function is the first AUSF network element or the AAnF network element, the subscriber identifier of the user equipment is an SUPI of the user equipment.

When the third network function is the third-party AF network element, the subscriber identifier of the user equipment is a GPSI of the user equipment. Optionally, the second request may further carry first information, and the first information may include one or more of a serving network name of a first serving network, an identifier of the first AUSF network element, or an access type. Optionally, the second request may be an authentication obtaining request (nudm_UEauthentication_get). For example, S301 may be replaced with the following descriptions: The third network function sends the authentication obtaining request to the UDM network element. In this case, the authentication obtaining request may carry second information. The second information indicates the UDM network element to perform authentication on the user equipment, and the second information may be an authentication indication.

It should be noted that if the third network function is the first AUSF network element, the second request may alternatively be an SOR protection response or a UPU protection response. In this case, the SOR protection response or the UPU protection response may also carry the second information.

It may be understood that the first information may also indicate the UDM network element to perform authentication on the user equipment, or the second information may be separately set as authentication indication information. In addition, fields occupied by the second information carried in different messages may be different.

S302: The UDM network element determines the first information.

Specifically, if the second request carries the first information, the UDM network element receives the second request from the third network function, and obtains the first information from the second request. In this case, the first information may include one or more of the serving network name, the identifier of the first AUSF network element, or the access type in S301.

If the second request does not carry the first information, the UDM network element may obtain the first information based on local configuration information. In this case, the first information may include information about the first AMF network element. For specific content of the local configuration information, refer to the descriptions in step S201. Details are not described herein again.

S303: The UDM network element determines the first AMF network element based on the first information.

Specifically, the UDM network element may determine the first AMF network element in one or more of the following manners.

Manner 3-1: The first information may include the serving network name of the first serving network, and the UDM network element determines the first AMF network element based on the serving network name.

Manner 3-2: The first information may include the identifier of the first AUSF network element, and the UDM network element determines the first AMF network element based on the identifier of the first AUSF network element.

In a possible implementation, the UDM network element may first determine the serving network name of the first serving network based on the identifier of the first AUSF network element, and then determine the first AMF network element based on the serving network name.

Manner 3-3: The first information may include the access type, and the first network function determines the first AMF network element based on the access type.

In a possible implementation, the UDM network element may first determine the serving network name of the first serving network based on the access type, and then determine the first AMF network element based on the serving network name.

Manner 3-4: The first information may include the information about the first AMF network element. The first AMF network element may be obtained by the UDM network element based on the local configuration information in step S201, and the UDM network element directly determines the first AMF network element based on the information about the first AMF network element.

In addition, if the first information is carried in the authentication obtaining request, the SOR protection response, or the UPU protection response for sending, the UDM network element may determine the first AMF network element based on the first information after obtaining the second information.

S304: The UDM network element sends a first request to the first AMF network element.

The first request requests the first AMF network element to perform a first authentication procedure on the user equipment, and the first request carries the subscriber identifier. The first authentication procedure may be an authentication procedure initiated based on the foregoing steps S301 to S304.

Optionally, the first request may carry the identifier of the first AUSF network element, to avoid a problem that a key update failure is caused because the first AMF network element selects a different AUSF network element.

S305: The first AMF network element determines whether there is an ongoing second authentication procedure.

S306: The first AMF network element determines a second network function.

S307: The first AMF network element sends third information to the UDM network element. Specifically, for a specific process of steps S305 to S307, refer to the foregoing steps S204 to S206. Details are not described herein again.

In addition, in a dual-registration scenario, the UDM network element may also obtain sixth information of a second AMF network element with reference to the foregoing steps S301 and S302. The foregoing timing mechanism and the fifth information may be used to resolve a problem that the user equipment cannot initiate authentication to another mobility management function because one mobility management function cannot perform authentication in the dual-registration scenario. For a specific process, refer to the foregoing descriptions based on the timing mechanism and the fifth information. Details are not described herein again.

With reference to a specific 5G core network element, the following describes in detail a specific implementation method of the authentication method provided in embodiments of this application. A first network function is a first AUSF network element, a third network function is a UDM network element, and a first mobility management function is a first AMF network element.

For example, FIG. 4 is a schematic flowchart 3 of an authentication method according to an embodiment of this application. The authentication method may be applicable to the communication system shown in FIG. 1, and specifically implements the authentication method shown in FIG. 2.

S401: A fourth network function sends a fourth request to the UDM network element.

The fourth network function may be an AAnF network element or a third-party AF network element, the fourth request carries a subscriber identifier, and the fourth request requests the UDM network element to perform authentication on user equipment.

Optionally, the fourth request may further carry seventh information. The seventh information may include one or more of an identifier of the first AUSF network element, a serving network name, or an access type.

When the seventh information includes the identifier of the first AUSF network element, the identifier of the first AUSF network element may be used by the UDM network element to determine information about the first AMF network element, or may be used by the UDM network element to select the first AUSF network element to perform authentication on the user equipment. Optionally, the fourth request may alternatively be an authentication obtaining request (nudm_UEauthentication_get), the authentication obtaining request may also carry eighth information, the eighth information may be an authentication indication, and the eighth information indicates the UDM network element to perform authentication on the user equipment. Further, after obtaining the eighth information, the UDM network element performs the following step S402.

It may be understood that the seventh information may also indicate the UDM network element to perform authentication on the user equipment.

S402: The UDM network element obtains first information.

If the fourth request carries the seventh information, the UDM network element determines the first information based on the seventh information. In this case, the first information may include the information about the first AMF network element.

Specifically, the UDM network element may determine the information about the first AMF network element in one or more of the following manners.

Manner 4-1: The seventh information may include a serving network name of a first serving network, and the information about the first AMF network element belongs to information about an AMF network element in a network corresponding to the serving network name.

Manner 4-2: The seventh information may include the identifier of the first AUSF network element, and the UDM network element determines the information about the first AMF network element based on the identifier of the first AUSF network element.

In a possible implementation, the UDM network element may first determine a serving network name of a first serving network based on the identifier of the first AUSF network element, and then determine the information about the first AMF network element based on the serving network name.

Manner 4-3: The seventh information may include the access type, and the UDM network element determines the information about the first AMF network element based on the access type.

In a possible implementation, the UDM network element may first determine a serving network name of a first serving network based on the access type, and then determine the information about the first AMF network element based on the serving network name.

If the fourth request does not carry the seventh information, the UDM network element may determine the first information based on local configuration information. For specific content of the local configuration information, refer to the descriptions in step S201. Details are not described herein again.

In addition, the UDM network element may further generate an authentication vector (authentication vector, AV) based on the fourth request.

If the UDM network element performs authentication on the user equipment based on 5G AKA, a generated 5G AV includes a KAUSF, a random number (RAND), an authentication token (authentication token, AUTN), and an expected response (expected response, XRES*).

If the UDM network element performs authentication on the user equipment based on EAP-AKA', a generated AV includes a cipher key (cipher key, CK'), an integrity key (integrity key, IK'), a RAND, an AUTN, and an XRES*.

S403: The UDM network element sends a second request to the first AUSF network element. Specifically, if the fourth request carries the identifier of the first AUSF network element, the UDM network element selects the first AUSF network element corresponding to the identifier and sends the second request.

If the fourth request does not carry the identifier of the first AUSF network element, the UDM network element may select an AUSF network element in a latest authentication event of the user equipment as the first AUSF network element, or select an AUSF network element that supports an authentication feature as the first AUSF network element, and send the second request.

The second request may carry the subscriber identifier and the first information (the information about the first AMF network element).

Optionally, the second request may further carry the AV, to avoid that the first AMF network element requests the AV from the UDM network element after accepting the first request, to reduce signaling overheads and improve authentication efficiency.

Optionally, the second request may further carry the serving network name of the first serving network, so that the first AUSF network element subsequently sends, to the first AMF network element, a KSEAF calculated based on the KAUSF.

S404: The first AUSF network element determines the first information.

Specifically, the first AUSF network element receives the first information (the information about the first AMF network element) carried in the second request.

S405: The first AUSF network element determines the first AMF network element based on the first information.

Specifically, the first AUSF network element determines the first AMF network element based on the information about the first AMF network element. The information about the first AMF network element may be an identifier of the first AMF network element.

S406: The first AUSF network element sends the first request to the first AMF network element.

Specifically, the first request may carry the subscriber identifier and an authentication parameter, and may not carry the identifier of the first AUSF network element. The authentication parameter is determined based on an authentication manner selected by the UDM network element in S402. When the 5G AKA is used, the authentication parameter may be the RAND, the AUTN, and a home region expected response (home region expected response, HXRES*), and the HXRES* is obtained by the first AUSF network element through calculation based on the XRES*. When the EAP-AKA' is used, the authentication parameter may be the RAND and the AUTN. This is not limited herein.

Optionally, the first request may further carry an authentication context identifier, and the authentication context identifier may be carried in an authentication response subsequently returned by the first AMF network element for the user equipment, to identify authentication context.

S407: The first AMF network element determines whether there is an ongoing second authentication procedure.

The second authentication procedure may be an authentication procedure initiated by the first AMF network element.

In a possible design solution, if the first AMF network element does not have an ongoing second authentication procedure, the first AMF network element performs the following step S408.

In another possible design solution, if the first AMF network element has an ongoing second authentication procedure, the first AMF network element performs the following step S409.

In another possible design solution, if the second authentication procedure initiated by the first AMF network element fails, the first AMF network element may accept the first request, to be specific, may perform a previously suspended first authentication procedure or receive the first request again and perform the following step S408. That the second authentication procedure fails may be that the first AMF network element does not receive an authentication result, or the second authentication procedure is interrupted or terminated. This is not limited in this embodiment of this application.

S408: The first AMF network element determines a second network function.

Specifically, because the first AUSF network element initiates the authentication to the first AMF network element, the second network function is the first AUSF network element. In other words, the first AMF network element may select the first AUSF network element to perform a subsequent 5G AKA or EAP-AKA' authentication procedure that is not performed, to perform authentication on the user equipment.

S409: The first AMF network element sends third information to the first AUSF network element. Specifically, the third information indicates that the first AMF network element has terminated or suspended the first authentication procedure initiated by the first AUSF network element. The first authentication procedure is the authentication procedure initiated based on the foregoing steps S401 to S406. The third information may be an authentication termination or suspension indication, or may be a cause value of authentication termination or suspension, and the cause value may be that the first AMF network element has an ongoing authentication procedure, or the first AMF network element has initiated an authentication procedure. In other words, the third information indicates that the first AMF network element has an ongoing authentication procedure, and the first AMF network element does not accept the first request from the first AUSF network element. In addition, the third information may be sent by using a second response, and the second response is a response message for the first request.

Optionally, S410 is further included: The first AUSF network element sends the third information to the UDM network element.

Similarly, in a dual-registration scenario, the UDM network element may obtain the first information and sixth information that are corresponding to the first AMF network element and a second AMF network element, and send information about two corresponding AMF network elements and two corresponding AVs to the first AUSF network element.

It may be understood that determining of the sixth information is similar to that of the first information. For details, refer to the foregoing steps S401 to S404. Details are not described herein again.

In a possible design solution, if the first AUSF network element receives no fourth information from the first AMF network element within a period of time, the first AUSF network element sends a third request to the second AMF network element.

The fourth information indicates that the first AMF network element has accepted the first request. The receiving no fourth information indicates that the first AMF cannot perform authentication on the user equipment. For example, the user equipment is in an idle mode, or the first AMF network element cannot implement paging for connection for a long time (the user equipment is unreachable), and therefore the authentication cannot be performed. The third request requests the second AMF network element to perform authentication on the user equipment, and the third request may also carry the subscriber identifier.

Specifically, the period of time is specified timing duration, and a start moment of the timing duration may be a moment at which the first AUSF network element sends the first request. For example, a timer may be set. When the first request is sent, the timer starts timing. When the timing duration of the timer expires, that is, the timing ends, if the first AUSF network element still does not receive, from the first AMF network element, information indicating that the authentication is accepted, the first AUSF network element sends the third request to the second AMF network element.

In addition, the fourth information may also be sent by using the second response, and the second response is the response message for the first request.

Optionally, a timing mechanism may also be set in the UDM network element. Specifically, if the UDM network element does not receive, within a set timing duration, the fourth information returned by the first AUSF network element, the UDM network element sends the second request to the first AUSF network element again, to indicate the first AUSF network element to send the third request to the second AMF network element.

A start moment of the timing duration set by the UDM network element may be a moment at which the second request is sent, and the timing duration set by the UDM network element is greater than the timing duration set by the first AUSF network element.

In a possible design solution, the first AUSF network element may receive fifth information from the first AMF network element, and then send the third request to the second AMF network element.

The fifth information indicates that the first AMF network element has rejected the first request. For example, the first AMF network element cannot perform authentication on the user equipment or the user equipment is unreachable. The fifth information may be sent by using the second response, and the second response is the response message for the first request.

Specifically, after performing step S406, the first AUSF network element may receive an indication or a cause value that is returned by the first AMF network element and that indicates that the first AMF network element cannot perform authentication, namely, the fifth information. The first AUSF network element determines, based on the fifth information, that the first AMF network element cannot perform authentication, and sends a request to the second AMF network element with which the user equipment is registered, to perform authentication on the user equipment.

In another possible design solution, the first AUSF network element may send the first request and the third request to the first AMF network element and the second AMF network element at the same time, and determine, based on returned information, an AMF network element that can perform authentication. The returned information may be an authentication result for the user equipment, or may be an indication or a cause value indicating that the first AMF network element or the second AMF network element cannot perform authentication. This is not limited herein. Further, based on the authentication method shown in FIG. 3, in the authentication method shown in FIG. 4, the UDM network element initiates the authentication to the first AUSF network element after receiving a request, and the UDM network element pre-generates an authentication vector in an authentication triggering process, includes the authentication vector in the request, and sends the request to the first AUSF network element. This can avoid that an authentication AMF network element requests the authentication vector from the UDM network element after receiving the request, to reduce the signaling overheads, and improve the authentication efficiency.

Further, the UDM network element may directly receive a request from the first AUSF network element, and does not need to initiate the authentication to the first AUSF after another network function triggers authentication. For example, FIG. 5 is a schematic flowchart 4 of an authentication method according to an embodiment of this application. The authentication method may be applicable to the communication system shown in FIG. 1, and specifically implements the authentication method shown in FIG. 2.

As shown in FIG. 5, the authentication method includes the following steps.

S501: A first AUSF network element sends a fourth request to a UDM network element.

The fourth request may carry a subscriber identifier, the subscriber identifier is an SUPI, and the fourth request requests the UDM network element to perform authentication on user equipment. Optionally, the fourth request may further carry seventh information, and the seventh information may be one or more of a serving network name of a first serving network, an identifier of the first AUSF network element, or an access type.

Optionally, the fourth request may alternatively be an authentication obtaining request (nudm_UEauthentication_get), an SOR protection response, or a UPU protection response. The authentication obtaining request, the SOR protection response, or the UPU protection response carries eighth information, the eighth information may be an authentication indication, and the eighth information indicates the UDM network element to perform authentication on the user equipment.

It may be understood that the eighth information may also indicate the UDM network element to perform authentication on the user equipment.

S502: The UDM network element obtains first information.

Specifically, for a specific process of step S502, refer to step S402. Details are not described herein again.

S503: The UDM network element sends a first response to the first AUSF network element. Specifically, because the fourth request is initiated by the first AUSF network element, the UDM network element may directly select the first AUSF network element to send the first response. The first response is a response message for the fourth request.

The first response may carry the subscriber identifier (SUPI) and the first information (information about a first AMF network element).

Optionally, the first response may further carry an AV, to avoid that the first AMF network element requests the AV from the UDM network element after accepting a first request, to reduce signaling overheads and improve authentication efficiency. For specific descriptions of the AV, refer to step S402.

Optionally, a second response may further carry the serving network name of the first serving network, so that the first AUSF network element subsequently sends, to the first AMF network element, a KSEAF calculated based on a KAUSF.

S504: The first AUSF network element determines the first information.

Specifically, the first AUSF network element receives the first information (the information about the first AMF network element) carried in the first response.

S505: The first AUSF network element determines the first AMF network element based on the first information.

S506: The first AUSF network element sends the first request to the first AMF network element.

S507: The first AMF network element determines whether there is an ongoing second authentication procedure.

S508: The first AMF network element determines a second network function.

S509: The first AMF network element sends third information to the first AUSF network element. Specifically, for a specific process of steps S505 to S509, refer to the foregoing steps S405 to S409. Details are not described herein again.

Optionally, S510 is further included: The first AUSF network element may send the third information to the UDM network element.

Optionally, before performing step S501, the first AUSF network element may further receive a request from a fourth network function. The request may also carry the subscriber identifier, and the fourth network function may be an AAnF network element or a third-party AF network element. In the authentication method shown in FIG. 5, the first AUSF network element that belongs to a home network triggers authentication, exchanges information with the UDM network element, and performs a subsequent authentication procedure after determining the first AMF network element. This can resolve a problem of inconsistent AUSF network element selection.

The authentication method shown in FIG. 5 is still applicable to authentication processing in a dual-registration scenario. For a specific process, refer to the descriptions in the authentication method shown in FIG. 4. Details are not described herein again.

Based on the authentication method shown in any one of FIG. 2 to FIG. 5, a first network function that belongs to the home network determines a first mobility management function, and sends a request to the first mobility management function, so that the first mobility management function can perform a subsequent authentication procedure based on a requirement of the home network. This can resolve a problem that authentication reliability is low because an authentication procedure can be triggered by only a mobility management function, so that the authentication reliability is improved.

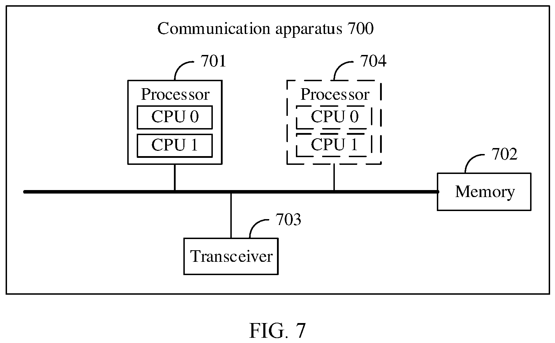

The authentication method provided in embodiments of this application is described above in detail with reference to FIG. 2 to FIG. 5. The following describes in detail a communication apparatus configured to perform the authentication method provided in embodiments of this application with reference to FIG. 6 and FIG. 7.

For example, FIG. 6 is a diagram 1 of a structure of a communication apparatus according to an embodiment of this application. The communication apparatus is configured to perform a function performed by the first network function in the authentication method shown in FIG. 2. As shown in FIG. 6, a communication apparatus 600 includes a processing module 601 and a transceiver module 602. For ease of description, FIG. 6 shows only main components of the communication apparatus.

The processing module 601 is configured to determine first information.

The processing module 601 is further configured to determine a first mobility management function based on the first information, where the first mobility management function belongs to a first serving network with which user equipment is registered.

The transceiver module 602 is configured to send a first request to the first mobility management function, where the first request requests the first mobility management function to perform a first authentication procedure on the user equipment.

Optionally, the transceiver module 602 may include a receiving module and a sending module (not shown in FIG. 6). The sending module is configured to implement a sending function of the communication apparatus 600, and the receiving module is configured to implement a receiving function of the communication apparatus 600.

Optionally, the communication apparatus 600 may further include a storage module (not shown in FIG. 6), and the storage module stores a program or instructions. When the processing module executes the program or the instructions, the communication apparatus 600 is enabled to perform the function of the first network function in the authentication method shown in FIG. 2.

It should be noted that the communication apparatus 600 may be the UDM network element in the authentication method shown in FIG. 3, or a chip or a chip system disposed in the UDM network element; or the communication apparatus 600 may be the first AUSF network element in the authentication method shown in FIG. 4 or FIG. 5, or a chip or a chip system disposed in the first AUSF network element. For technical effects of the communication apparatus 600, refer to related descriptions of technical effects of the method embodiment shown in FIG. 3, FIG. 4, or FIG. 5. Details are not described herein again.

The communication apparatus shown in FIG. 6 may be alternatively configured to perform a function of the third network function in the authentication method shown in FIG. 3. As shown in FIG. 6, the processing module 601 is configured to determine first information, where the first information is used to determine a first mobility management function, and the first mobility management function belongs to a first serving network with which user equipment is registered. The transceiver module 602 is configured to send the first information to a first network function, where the first network function belongs to a home network of the user equipment.

Optionally, the transceiver module 602 may include a receiving module and a sending module (not shown in FIG. 6). The sending module is configured to implement a sending function of the communication apparatus 600, and the receiving module is configured to implement a receiving function of the communication apparatus 600.

Optionally, the communication apparatus 600 may further include a storage module (not shown in FIG. 6), and the storage module stores a program or instructions. When the processing module executes the program or the instructions, the communication apparatus 600 is enabled to perform the function of the third network function in the authentication method shown in FIG. 3.

It should be noted that the communication apparatus 600 may be the UDM network element in the authentication method shown in FIG. 4 or FIG. 5, or a chip or a chip system disposed in the UDM network element. For technical effects of the communication apparatus 600, refer to related descriptions of technical effects of the method embodiment shown in FIG. 4 or FIG. 5. Details are not described herein again.

The communication apparatus shown in FIG. 6 may be further configured to perform a function performed by the first mobility management function in the authentication method shown in FIG. 2. The transceiver module 602 is configured to receive a first request from a first network function, where the first network function belongs to a home network of user equipment.

The processing module 601 is configured to determine a second network function after the first request is received.

Optionally, the transceiver module 602 may include a receiving module and a sending module (not shown in FIG. 6). The sending module is configured to implement a sending function of the communication apparatus 600, and the receiving module is configured to implement a receiving function of the communication apparatus 600.

Optionally, the communication apparatus 600 may further include a storage module, and the storage module stores a program or instructions. When the processing module executes the program or the instructions, the communication apparatus 600 is enabled to perform the function of the first mobility management function in the authentication method shown in FIG. 2.

In addition, the communication apparatus 600 may be the first AMF network element in the authentication method shown in any one of FIG. 3 to FIG. 5, or a chip or a chip system disposed in the first AMF network element. For technical effects of the communication apparatus 600, refer to related descriptions of technical effects of the method embodiment shown in any one of FIG. 3 to FIG. 5. Details not described herein again.

For example, FIG. 7 is a diagram 2 of a structure of a communication apparatus according to an embodiment of this application. The communication apparatus may be a network device, or may be a chip (system) or another part or component that can be disposed in the network device. As shown in FIG. 7, a communication apparatus 700 may include a processor 701. Optionally, the communication apparatus 700 may further include a memory 702 and/or a transceiver 703. The processor 701 is coupled to the memory 702 and the transceiver 703. For example, the processor 701 may be connected to the memory 702 and the transceiver 703 through a communication bus. The following describes each component of the communication apparatus 700 in detail with reference to FIG. 7.

The processor 701 is a control center of the communication apparatus 700, and may be one processor or may be a collective term of a plurality of processing elements. For example, the processor 701 may be one or more central processing units (central processing units, CPU), or an application-specific integrated circuit (application-specific integrated circuit, ASIC), or may be configured as one or more integrated circuits implementing embodiments of this application, for example, one or more microprocessors (digital signal processors, DSP) or one or more field programmable gate arrays (field programmable gate arrays, FPGA).

Optionally, the processor 701 may execute various functions of the communication apparatus 700 by running or executing a software program stored in the memory 702 and invoking data stored in the memory 702.

During specific implementation, in an embodiment, the processor 701 may include one or more CPUs, for example, a CPU 0 and a CPU 1 shown in FIG. 7.

During specific implementation, in an embodiment, the communication apparatus 700 may alternatively include a plurality of processors, for example, the processor 701 and a processor 704 shown in FIG. 7. Each of the processors may be a single-core processor (single-CPU) or may be a multi-core processor (multi-CPU). The processor herein may be one or more devices, circuits, and/or processing cores configured to process data (for example, computer program instructions). The memory 702 is configured to store a software program for executing the solution of this application, and the processor 701 controls execution. For a specific implementation, refer to the foregoing method embodiment, and details are not described herein again.

Optionally, the memory 702 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of instructions or a data structure and that can be accessed by a computer. However, this is not limited thereto. The memory 702 may be integrated with the processor 701, or may exist independently, and is coupled to the processor 701 by using an interface circuit (not shown in FIG. 7) of the communication apparatus 700. This is not specifically limited in this embodiment of this application.

The transceiver 703 is configured to communicate with another communication apparatus. For example, the communication apparatus 700 is a terminal device, and the transceiver 703 may be configured to communicate with a network device or communicate with another terminal device. For another example, the communication apparatus 700 is a network device, and the transceiver 703 may be configured to communicate with a terminal device or communicate with another network device.

Optionally, the transceiver 703 may include a receiver and a transmitter (not separately shown in FIG. 7). The receiver is configured to implement a receiving function, and the transmitter is configured to implement a sending function.

Optionally, the transceiver 703 may be integrated with the processor 701, or may exist independently, and is coupled to the processor 701 by using an interface circuit (not shown in FIG. 7) of the communication apparatus 700. This is not specifically limited in this embodiment of this application.

It should be noted that a structure of the communication apparatus 700 shown in FIG. 7 does not constitute a limitation on the communication apparatus. An actual communication apparatus may include more or fewer components than those shown in the figure, or combine some components, or have different component arrangement.

In addition, for technical effects of the communication apparatus 700, refer to technical effects of the authentication method in the foregoing method embodiment. Details are not described herein again.

An embodiment of this application provides a communication system. The communication system includes the foregoing one or more terminal devices, one or more access network devices, and one or more core network devices, such as a first network function and a second network function.

An embodiment of this application provides a computer-readable storage medium. The computer-readable storage medium stores computer instructions. When the computer instructions are run on a computer, the computer is enabled to perform the authentication method shown in any one of FIG. 2 to FIG. 5.

An embodiment of this application provides a computer program product including instructions. The computer program product includes a computer program or instructions. When the computer program or the instructions are run on a computer, the computer is enabled to perform the authentication method shown in any one of FIG. 2 to FIG. 5.

It should be understood that the processor in this embodiment of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitative descriptions, random access memories (random access memories, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When the software is used for implementation, all or some of the foregoing embodiments may be implemented in a form of a computer program product. The computer program product includes one or more computer instructions or computer programs. When the computer instructions or computer programs are loaded or executed on a computer, all or some of procedures or functions according to embodiments of this application are generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. A specific meaning depends on a context.

In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. A person of ordinary skill in the art may be aware that, in combination with the examples described in embodiments disclosed in this specification, units and algorithm steps may be implemented by electronic hardware or a combination of computer software and electronic hardware. Whether the functions are executed by hardware or software depends on specific applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for specific working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method, wherein the method comprises:
determining, by a first network function, first information, wherein the first network function belongs to a home network of user equipment;
determining, by the first network function, a first mobility management function based on the first information, wherein the first mobility management function belongs to a first serving network with which the user equipment is registered; and
sending, by the first network function, a first request to the first mobility management function, wherein the first request requests the first mobility management function to perform a first authentication procedure on the user equipment.

2. The method according to claim 1, wherein
the first information comprises a serving network name of the first serving network; and
the determining, by the first network function, a first mobility management function based on the first information comprises:
determining, by the first network function, the first mobility management function based on the serving network name;
and/or
the first information comprises an identifier of a first authentication server function; and
the determining, by the first network function, a first mobility management function based on the first information comprises:
determining, by the first network function, a serving network name of the first serving network based on the identifier of the first authentication server function; and
determining, by the first network function, the first mobility management function based on the serving network name;
and/or
the first information comprises an access type; and
the determining, by the first network function, a first mobility management function based on the first information comprises:
determining, by the first network function, a serving network name of the first serving network based on the access type; and
determining, by the first network function, the first mobility management function based on the serving network name.

3. The method according to claim 2, wherein the determining, by a first network function, first information comprises:
receiving, by the first network function, the first information from a third network function, wherein
the first network function is a unified data management function, the third network function is one of the following: the first authentication server function, an authentication and key management for applications anchor function, or a third-party application function, and the third network function belongs to the home network.

4. The method according to claim 3, wherein the first information is carried in one of the following: a second request, an authentication obtaining request, a steering of roaming protection response, or a user equipment parameter update protection response, wherein the authentication obtaining request, the steering of roaming protection response, or the user equipment parameter update protection response further comprises second information, and the second information indicates the first network function to perform authentication on the user equipment; and
the determining, by the first network function, a first mobility management function based on the first information comprises:
determining, by the first network function, the first mobility management function based on the first information after obtaining the second information.

5. The method according to any one of claims 1 to 4, wherein after the sending, by the first network function, a first request to the first mobility management function, the method further comprises:
receiving, by the first network function, third information from the first mobility management function, wherein the third information indicates that the first mobility management function has terminated or suspended the first authentication procedure initiated by the first network function.

6. The method according to any one of claims 1 to 4, wherein after the sending, by the first network function, a first request to the first mobility management function, the method further comprises:
receiving, by the first network function, no fourth information from the first mobility management function within a period of time; or receiving, by the first network function, fifth information from the first mobility management function; and
sending, by the first network function, a third request to a second mobility management function, wherein
the fourth information indicates that the first mobility management function has accepted the first request, the fifth information indicates that the first mobility management function has rejected the first request, the second mobility management function belongs to a second serving network with which the user equipment is registered, the second mobility management function is determined based on sixth information, and the third request requests the second mobility management function to perform authentication on the user equipment.

7. The method according to any one of claims 1 to 6, wherein the first request carries the identifier of the first authentication server function, and the identifier of the first authentication server function is used by the first mobility management function to determine a second network function.

8. An information sending method, wherein the method comprises:
determining, by a third network function, first information, wherein the first information is used to determine a first mobility management function, and the first mobility management function belongs to a first serving network with which user equipment is registered; and
sending, by the third network function, the first information to a first network function, wherein the first network function and the third network function belong to a home network of the user equipment.

9. The method according to claim 8, wherein
the first information comprises a serving network name of the first serving network; and/or
the first information comprises an identifier of a first authentication server function, and the first mobility management function is a mobility management function corresponding to the identifier of the first authentication server function; and/or
the first information comprises an access type, and the first mobility management function is a mobility management function corresponding to the access type.

10. The method according to claim 9, wherein the first network function is a unified data management function, and the third network function is one of the following: the first authentication server function, an authentication and key management for applications anchor function, or a third-party application function.

11. The method according to claim 10, wherein the first information is carried in one of the following: a second request, an authentication obtaining request, a steering of roaming protection response, or a user equipment parameter update protection response, wherein
the authentication obtaining request, the steering of roaming protection response, or the user equipment parameter update protection response further comprises second information, and the second information indicates the first network function to perform authentication on the user equipment.

12. A processing method, wherein the method comprises:
receiving, by a first mobility management function, a first request from a first network function, wherein the first mobility management function belongs to a first serving network with which user equipment is registered, and the first network function belongs to a home network of the user equipment; and
determining, by the first mobility management function, a second network function after receiving the first request.

13. The method according to claim 12, wherein the first request carries an identifier of a first authentication server function, and the second network function is the first authentication server function.

14. The method according to claim 12 or 13, further comprising:
if the first mobility management function has an ongoing second authentication procedure, sending, by the first mobility management function, third information to the first network function, wherein the third information indicates that the first mobility management function has terminated or suspended a first authentication procedure initiated by the first network function; or
sending, by the first mobility management function, fifth information to the first network function, wherein the fifth information indicates that the first mobility management function has rejected the first request.

15. A communication apparatus, wherein the apparatus comprises a processing module and a transceiver module, wherein
the processing module is configured to determine first information;
the processing module is further configured to determine a first mobility management function based on the first information, wherein the first mobility management function belongs to a first serving network with which user equipment is registered; and
the transceiver module is configured to send a first request to the first mobility management function, wherein the first request requests the first mobility management function to perform a first authentication procedure on the user equipment.

16. The apparatus according to claim 15, wherein
the first information comprises a serving network name of the first serving network, and the processing module is further configured to:
determine the first mobility management function based on the serving network name;
and/or
the first information comprises an identifier of a first authentication server function, and the processing module is further configured to:
determine a serving network name of the first serving network based on the identifier of the first authentication server function; and determine the first mobility management function based on the serving network name;
and/or
the first information comprises an access type, and the processing module is further configured to:
determine a serving network name of the first serving network based on the access type; and determine the first mobility management function based on the serving network name.

17. The apparatus according to claim 16, wherein the transceiver module is further configured to receive the first information from a third network function, wherein the third network function is one of the following: the first authentication server function, an authentication and key management for applications anchor function, or a third-party application function, and the third network function belongs to a home network of the user equipment.

18. The apparatus according to claim 17, wherein the first information is carried in one of the following: a second request, an authentication obtaining request, a steering of roaming protection response, or a user equipment parameter update protection response, wherein
the authentication obtaining request, the steering of roaming protection response, or the user equipment parameter update protection response further comprises second information, and the second information indicates the apparatus to perform authentication on the user equipment; and
the processing module is further configured to determine the first mobility management function based on the first information after the second information is obtained.

19. The apparatus according to any one of claims 15 to 18, wherein
the transceiver module is further configured to: after sending the first request to the first mobility management function, receive third information from the first mobility management function, wherein the third information indicates that the first mobility management function has terminated or suspended the first authentication procedure initiated by the apparatus.

20. The apparatus according to any one of claims 15 to 18, wherein
the transceiver module is further configured to: after sending the first request to the first mobility management function, receive no fourth information from the first mobility management function within a period of time, or receive fifth information from the first mobility management function; and
the transceiver module is further configured to send a third request to a second mobility management function, wherein
the fourth information indicates that the first mobility management function has accepted the first request, the fifth information indicates that the first mobility management function has rejected the first request, the second mobility management function belongs to a second serving network with which the user equipment is registered, the second mobility management function is determined based on sixth information, and the third request requests the second mobility management function to perform authentication on the user equipment.

21. The apparatus according to any one of claims 15 to 20, wherein the first request carries the identifier of the first authentication server function, and the identifier of the first authentication server function is used by the first mobility management function to determine a second network function.

22. A communication apparatus, wherein the apparatus comprises a processing module and a transceiver module, wherein
the processing module is configured to determine first information, wherein the first information is used to determine a first mobility management function, and the first mobility management function belongs to a first serving network with which user equipment is registered; and
the transceiver module is configured to send the first information to a first network function, wherein the first network function belongs to a home network of the user equipment.

23. The apparatus according to claim 22, wherein
the first information comprises a serving network name of the first serving network; and/or
the first information comprises an identifier of a first authentication server function, and the first mobility management function is a mobility management function corresponding to the identifier of the first authentication server function; and/or
the first information comprises an access type, and the first mobility management function is a mobility management function corresponding to the access type.

24. The apparatus according to claim 23, wherein the first network function is a unified data management function.

25. The apparatus according to claim 24, wherein the first information is carried in one of the following: a second request, an authentication obtaining request, a steering of roaming protection response, or a user equipment parameter update protection response, wherein
the authentication obtaining request, the steering of roaming protection response, or the user equipment parameter update protection response further comprises second information, and the second information indicates the first network function to perform authentication on the user equipment.

26. A communication apparatus, wherein the apparatus comprises a processing module and a transceiver module, wherein
the transceiver module is configured to receive a first request from a first network function, wherein the first network function belongs to a home network of user equipment; and
the processing module is configured to determine a second network function after the first request is received.

27. The apparatus according to claim 26, wherein the first request carries an identifier of a first authentication server function, and the second network function is the first authentication server function.

28. The apparatus according to claim 26 or 27, wherein
the transceiver module is further configured to: if there is an ongoing second authentication procedure, send third information to the first network function, wherein the third information indicates that the apparatus has terminated or suspended a first authentication procedure initiated by the first network function; or
the transceiver module is further configured to send fifth information to the first network function, wherein the fifth information indicates that the apparatus has rejected the first request.

29. A communication method, wherein the method comprises:
determining, by a first network function, first information, and determining a first mobility management function based on the first information, wherein the first network function belongs to a home network of user equipment, and the first mobility management function belongs to a first serving network with which the user equipment is registered;
sending, by the first network function, a first request to the first mobility management function, wherein the first request requests the first mobility management function to perform a first authentication procedure on the user equipment;
receiving, by the first mobility management function, the first request from the first network function; and
determining, by the first mobility management function, a second network function after receiving the first request.

30. The method according to claim 29, wherein
the first information comprises a serving network name of the first serving network; and
the determining, by the first network function, a first mobility management function based on the first information comprises:
determining, by the first network function, the first mobility management function based on the serving network name;
and/or
the first information comprises an identifier of a first authentication server function; and
the determining, by the first network function, a first mobility management function based on the first information comprises:
determining, by the first network function, a serving network name of the first serving network based on the identifier of the first authentication server function, and determining the first mobility management function based on the serving network name;
and/or
the first information comprises an access type; and
the determining, by the first network function, a first mobility management function based on the first information comprises:
determining, by the first network function, a serving network name of the first serving network based on the access type, and determining the first mobility management function based on the serving network name.

31. The method according to claim 30, wherein the determining, by a first network function, first information comprises:
receiving, by the first network function, the first information from a third network function, wherein
the first network function is a unified data management function, the third network function is one of the following: the first authentication server function, an authentication and key management for applications anchor function, or a third-party application function, and the third network function belongs to the home network.

32. The method according to claim 31, wherein the first information is carried in one of the following: a second request, an authentication obtaining request, a steering of roaming protection response, or a user equipment parameter update protection response, wherein the authentication obtaining request, the steering of roaming protection response, or the user equipment parameter update protection response further comprises second information, and the second information indicates the first network function to perform authentication on the user equipment; and
the determining, by the first network function, a first mobility management function based on the first information comprises:
determining, by the first network function, the first mobility management function based on the first information after obtaining the second information.

33. The method according to any one of claims 29 to 32, wherein after the sending, by the first network function, a first request to the first mobility management function, the method further comprises:
if the first mobility management function has an ongoing second authentication procedure, sending, by the first mobility management function, third information to the first network function, wherein the third information indicates that the first mobility management function has terminated or suspended the first authentication procedure initiated by the first network function; and
receiving, by the first network function, the third information from the first mobility management function.

34. The method according to any one of claims 29 to 32, wherein after the sending, by the first network function, a first request to the first mobility management function, the method further comprises:
receiving, by the first network function, no fourth information from the first mobility management function within a period of time, or receiving, by the first network function, fifth information from the first mobility management function; and
sending, by the first network function, a third request to a second mobility management function, wherein
the fourth information indicates that the first mobility management function has accepted the first request, the fifth information indicates that the first mobility management function has rejected the first request, the second mobility management function belongs to a second serving network with which the user equipment is registered, the second mobility management function is determined based on sixth information, and the third request requests the second mobility management function to perform authentication on the user equipment.

35. The method according to any one of claims 29 to 34, wherein the first request carries the identifier of the first authentication server function, and the identifier of the first authentication server function is used by the first mobility management function to determine the second network function.

36. A communication system, wherein the communication system comprises the communication apparatus according to any one of claims 15 to 21 and the communication apparatus according to any one of claims 26 to 28.

37. The system according to claim 36, wherein the communication system further comprises the communication apparatus according to any one of claims 22 to 25.

38. A computer-readable storage medium, wherein the computer-readable storage medium stores a computer program or instructions, and when the computer program or the instructions are run on a computer, the computer is enabled to perform the method according to any one of claims 1 to 14.

39. A computer program product, wherein the computer program product comprises a computer program or instructions, and when the computer program or the instructions are run on a computer, the computer is enabled to perform the method according to any one of claims 1 to 14.
